# EUROPEAN PATENT SPECIFICATION

(11) **EP 0 619 216 B1**
(45) Date of publication and mention of the grant of the patent: **11.09.1996**
(21) Application number: 94302481.0
(22) Date of filing: 08.04.1994
(51) Int. Cl.: B62D 25/20

(54) **A method of making a flooring material**
Verfahren zur Herstellung eines Bodenbelages
Procédé de fabrication d'un revêtement de plancher

(30) Priority: 08.04.1993 GB 9307388
(43) Date of publication of application: 12.10.1994
(73) Proprietor: PERSTORP COMPONENTS LIMITED, St. Neots, Cambs. PE19 2ER (GB)
(72) Inventor: Beck, Raymond Paul, Radlett, Herts WD7 7HN (GB); Scutt, Barry Charles, St Neots, Cambs PE19 4XJ (GB); Tompson, Graham, Alconbury, Cambs PE17 5ER (GB)
(74) Representative: Barlow, Roy James

(56) References cited:
- GB-A- 2 118 909
- US-A- 1 776 510
- US-A- 2 898 146

## Description

The present invention relates to a flooring material which may be, but need not be, used in vehicles, for example road vehicles, and particularly in the rear of buses, mini buses, and vans. More particularly it relates to a composite, load bearing material and floor unit to be supplied by manufacturers with such vehicles. It also relates to a method of producing such a material.

In many vehicles a surface is needed, above the basic metal of the floor shell, to make up the floor. The floor is usually required to be flat, strong with good load bearing capabilities, hard wearing and durable. Conventionally the floors in the rear of motor vehicles are made up from a number of hardboard boards fixed into set positions and covered over with rubber matting which may, or may not be glued to the under-layer of boards. Installing such a flooring system in a vehicle is usually labour intensive and time consuming, since it involves placing each of the boards individually and securing them by separate fittings to the underfloor of the vehicle, and then the further step of laying the rubber matting over the top, either in separate pieces or as a whole piece. Such a flooring system requires the storage of a number of different shapes of board for use in a single design of vehicle, and an even greater number if there are variations in the range provided by the manufacturer.

This conventional system also suffers from the disadvantage that the rubber matting may not always lie flat against the boards, but may have ridges in it. This, if it is not solved immediately, may well be a nuisance, if only visually, further down a production line or once the vehicle is in use. It may well result in further time being taken over assembling the vehicle.

A further disadvantage of using a number of boards is that unless they are fitted tightly they will rattle, or scrape against each other and cause added noise within the vehicle above any noise which may have passed through from underneath the vehicle or elsewhere. The hardboard also acts as an acoustic sounding board.

Many of these problems are considered in document US 1,776,510. This discloses a flooring made from sheathing floor members, e.g. wood, in vulcanisable rubber and pressing and treating the assembly in a mould. Although this document was filed in 1928, the other, "conventional system" is still what is used.

The present invention is intended to overcome at least some of these problems associated with known systems.

According to the present invention there is provided a method of making a composite flooring material comprising the step of providing a flexible elastomer material on a first surface of one or more rigid substrate members; characterised in that said providing step comprises the step of injection moulding said elastomer material directly onto said first surface.

The invention also includes products of this method.

Preferably the elastomer is a polyurethane.

Suitably the elastomer is formed using a polyol stream and/or an isocyanate stream.

Preferably the substrate member or members are plywood and more preferably waterproof and boilable (WPB) plywood. In larger uses of the material there may be several such members which are taped together with adhesive tape before being covered with a common elastomer layer.

Once a sheet of the material has been produced a floor unit for a particular vehicle may be cut from it.

The structural composite flooring material of the present invention has the advantages of being an integral material with good load bearing properties due to the rigid substrate layer and very high durability in the integrally moulded layer. A further advantage is to be found in that not only does the single unit, which is capable of covering the whole floor, reduce the potential number of rattling parts, but that the composite material itself has good acoustic properties and can reduce the amount of noise transmitted from beneath the vehicle to within.

The preferred elastomers have the advantages of being hard wearing, flexible, and temperature resistant.

Further, because plywood is approximately half the weight of the hardboard (having the same strength) it is replacing and because the thickness of the elastomer does not have to be large, owing to its toughness, there can be a considerable weight saving involved.

In order that the present invention may be more readily understood the following description is given, merely by way of example, with reference to the accompanying drawings, in which:-
FIGURE 1 is a perspective view of a flooring unit made up of a material according to the present invention, for use in the back of a minibus;
FIGURE 2 is a sectional view taken along line A-A of Figure 1;
FIGURE 3a is a sectional view taken along the line B-B of Figure 1;
FIGURE 3b is a sectional view taken along the line B-B of Figure 1,as the flooring unit is installed.

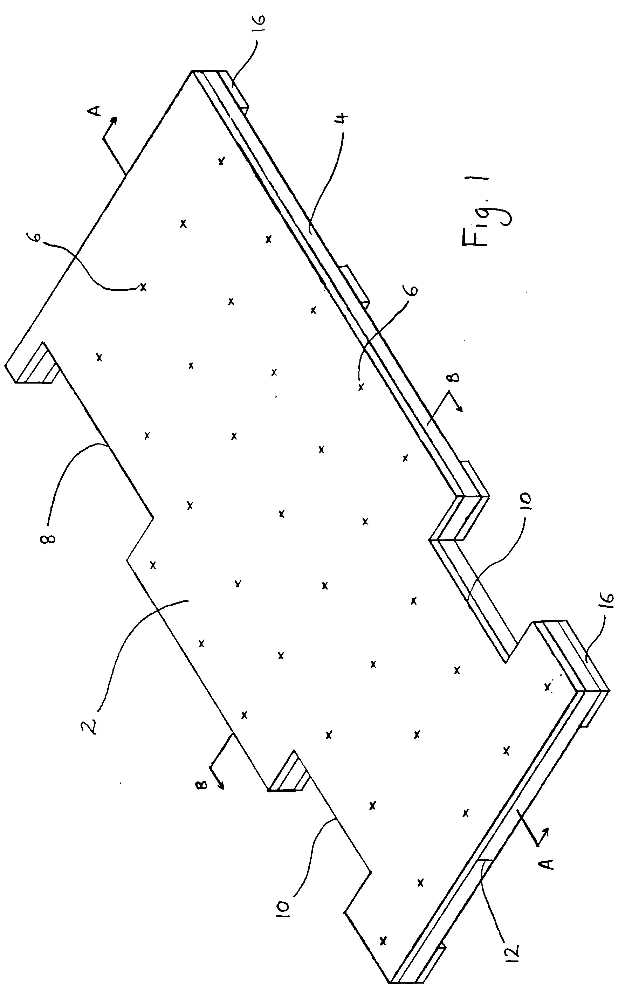

Referring now to the drawings, a floor unit made up of material according to the present invention is shown in Figure 1. The floor unit comprises a top layer (2) of a elastomer bonded to a lower substrate layer (4) of plywood.

The floor unit of Figure 1 is made up from a piece of composite material which has been cut into shape to fit a particular vehicle with a particular seat arrangement. Seats are to be fastened to the sub-floor shell of the vehicle and may, for example, be bolted to the floor, by fastenings which pass through fastening holes (6) in the floor unit. The configuration of these holes (6) will vary according to the configuration of seating required by the manufacturer. Further, according to the requirements of the manufacturers and the vehicle into which the floor unit is to be fitted, there will be recesses (8,10) around the periphery. For example there may well be a recess (8) associated with the side door of the bus and further recesses (10) to accommodate wheel arches.

The floor unit of Figure 1 has two pieces of plywood making up the lower substrate layer. They abut each other along one edge along the length of the unit. The line along which they meet is a hinge line (12). Such a lower substrate layer of several substrate members is for use in larger applications such as minibuses where the flooring may well need to be hinged in order to allow it to be fitted. The elastomer itself is flexible and does not require a hinge line.

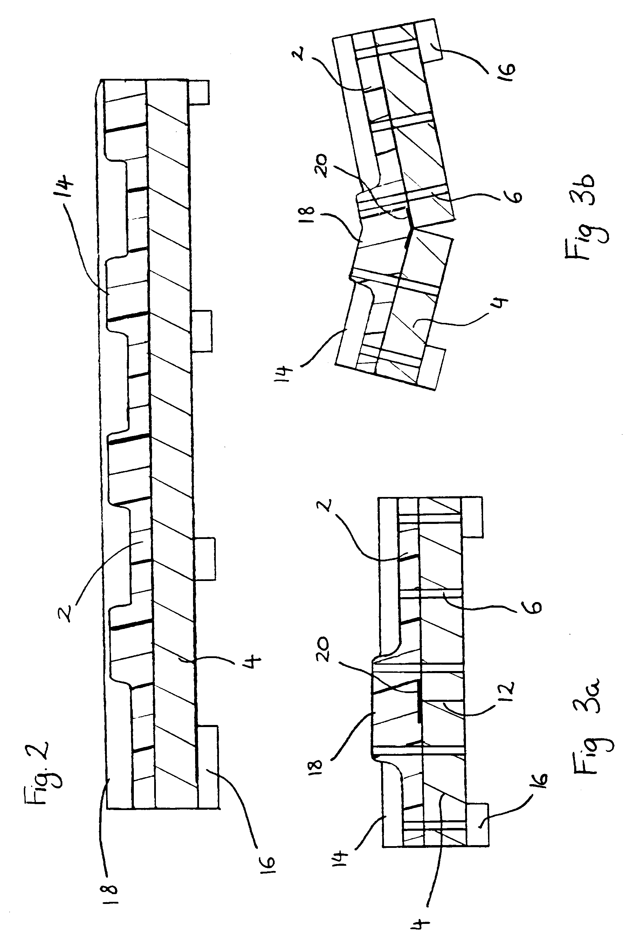

Figure 2 is a sectional view taken along the line A-A of Figure 1, which is along the length of the floor unit. In this Figure the depth of all the layers has been exaggerated, particularly the relative heights of areas of the elastomer layer. It shows the elastomer layer (2) lying atop the plywood substrate layer (4) with variations in thickness of the elastomer at various points along the length and across the width of the vehicle. The areas of greater depth of elastomer are at points where it is expected the floor will receive most use, i.e. where people are expected to put their feet, that is especially by the doors, along the aisle (18) and between the seats, at (14). The elastomer would not need to be as deep at other places, where it is hardly likely that it will ever be trodden on, for example beneath the seats. The ability to vary the thickness in an injection moulded material is a property of the preferred elastomers (described later), which property is not so readily found in sheets of rubber or other polymeric materials used in conventional vehicle flooring.

Figure 2 also shows supports (16) upon which the floor unit may rest and be secured to the shell of the vehicle. The supports may be of the same material as the top layer or any other suitable material, and may coincide with troughs or other recesses in the sub floor shell.

Figure 3a shows a sectional view taken along the line B-B of Figure 1, which is across the width of the vehicle. This view also exaggerates the depth of the material relative to the other dimensions and also shows the exaggerated variations in thickness of the elastomer across the width of the minibus and the fixing holes (6) through which the seats may be bolted. Further, it shows the hinge line (12) where the two plywood substrate members meet. The hinge line in this embodiment is shown as being towards one side of the floor unit. It may, instead, be down the middle of the floor unit or at any other suitable point. Covering this hingeline (12) along the entire length of the floor unit is tape (20), preferably adhesive tape, (which has also been exaggerated in these figures). This tape covers the hinge line (12), sticking to the edge of the substrate members on each side. It is positioned along the line before the elastomer is moulded onto the plywood and prevents it, under the pressure of the moulding process, from seeping down between the two members. If the tape is chosen such that the elastomer does not affix itself to the tape then, if the floor unit is flexed, the elastomer radiuses (not shown in the drawings) and does not hinge or have any apparent lines along the length of its surface. Bending the floor unit allows it to be fitted more easily in larger applications. In small applications, such as in the rear of smaller "pick-up" vehicles there may be no need for the flooring to be hinged at all and it may require only a single piece of plywood for the substrate layer.

As well as supplying protrusions to the underside of the plywood for fixing the floor unit down, other protrusions may be provided as bridging supports where the underfloor has wide gaps between those supports upon which the floor unit lies.

The composite material of the present invention is made by injection moulding an elastomer straight onto a single piece, or several pieces of plywood joined, as mentioned above, by tape. The elastomer binds itself onto the plywood, and thus renders as unnecessary an extra step of gluing the elastomer onto the substrate layer.

The resultant composite material can then be taken to be shaped by, for example, a waterjet cutter which not only cuts the material to the required outline but also can cut the fitting holes (6) in the material, through which the seats or other items are to be bolted, or possibly through which the floor unit itself may also be bolted to the shell of the vehicle. These supports can be injection moulded directly onto the underside of the plywood from below or through a leak channel provided from above, either before, at the same time as, or after the top layer of elastomer is moulded onto the topside. Though there may be other suitable ways of attaching the supports, especially if they are not made of the same material as the elastomer top layer.

The material used for the top layer in the present invention is an elastomer, typically of a polyurethane type, moulded from a polyol stream and/or an isocyanate stream, which is flexible and durable enough for the purpose.

The polyol stream typically contains a mixture of hydroxyl or amine ended polyether and/or polyester polymers with a functionality range of from 2.0 to 3.0 and a molecular weight range of from 500 to 8000, preferably a range from 1000 to 6000. The polyol stream may also contain a chain extender or a mixture thereof - preferably a glycol or a diamine with a molecular weight range of from 20 to 200. The polyol stream may also contain a mixture of catalysts, preferably a tertiary amine and/or a metal based catalyst.

The isocyanate stream involves using a polyisocyanate which may be any organic polyisocyanate compound or a mixture of polyisocyanate compounds provided said compounds have at least two isocyanate groups and the functionality of the total polyisocyanate composition is between 2.0 and 3.0 and preferably between 2.0 and 2.2.

Examples of organic polyisocyanates which may be used in the process include aliphatic isocyanates such as hexamethylene diisocyanate and/or aromatic isocyanates such as diphenylmethane 2 - 4' and 4 - 4'diisocyanate and Toluene 2,4 and 2,6 diisocyanate and/or prepolymers or quasi prepolymers of the above.

If it is a polyurethane it may be a foamed polyurethane and/or either unfilled or filled. If it is filled it may be with, for example, calcium carbonate or barium sulphate, both of which reduce costs but increase the weight and thus modify the sound deadening properties of the composite. Polyurethane can be used because it is flowable, and thus easily mouldable, some grades of polyurethane being sufficiently hard-wearing, when moulded, to serve as shoe soles.

The substrate layer is preferably made of plywood, though other rigid substrates may be used. These others may include fibreboard, specifically low density fibreboard, medium density fibreboard, or some plastics materials. Hardboard would be unsuitable since this lacks flexural integrity required in the floor unit and is easily broken. Other materials although strong may be too expensive or too heavy.

The plywood is preferably waterproof and boilable (WPB) plywood made from Far Eastern hardwood rather than from softwood since it is then stronger and less dense. The thickness of the substrate should be in the range of from 4 to 8mm and is preferably 5mm.

One of the problems which must be addressed during the manufacture of the composite material is the possibility of the substrate layer being warped by the elastomer as the top layer hardens. Solutions to this problem can include priming the substrate before the application of the elastomer or treating it after the application. A further solution is to pre-bend the substrate in the opposite direction such that after the elastomer has hardened the resultant composite will be flat. The advantage of using a material such as polyurethane is that it has consistent effects when it hardens and thus pre-bending the substrate layer to a particular degree gives consistent results.

Although the described embodiment refers to floor units using one or two plywood pieces in the substrate, it is envisaged that three or more pieces may be linked under a single piece of elastomer. This might be more useful in vehicles with restricted access, or larger vehicles. Further, in larger vehicles several units may be used, side by side.

With the conventional hardboard and rubber matting combination some trim pieces for the flooring need to be added by the fitter. However, with the present invention the substrate may stop short of the sidewalls and/or ends of the vehicle for which the flooring is produced, and have a lip seal around its periphery. The lip seal is intended to seal up against the vehicle body sidewall (either the interior sidewall or a metal flange upstanding from the perimeter of the floor area of the vehicle), so that it accommodates dimensional tolerances in the manufacture of the metal body of the vehicles. This lip seal provides both an acoustic seal and a guard against liquid seepage from within the main volume of the vehicle. This lip seal may be made from the same or a different material from the top layer of the flooring and may be added at a different time from the manufacture of the rest of the floor or at the same time. For instance it may be integrally moulded with the top layer.

The composite material of the present invention may have other uses as a flooring material besides being used in vehicles, but may for example be used in temporary structures or elsewhere.

## Claims

1. A method of making a composite flooring material comprising the step of providing a flexible elastomer material (2) on a first surface of one or more rigid substrate members (4); characterised in that said providing step comprises the step of injection moulding said elastomer material (2) directly onto said first surface.

2. A method according to claim 1, further comprising the step of moulding support members (16) onto a second surface of said one or more substrate members (4).

3. A method according to claim 1 or 2, wherein said flooring material includes a plurality of adjacent substrate members (4), and further comprising the step of applying tape (20) to bridge adjoining edges of said substrate members, prior to said injection moulding step.

4. A method according to claim 1, 2 or 3, further comprising the step of shaping said flooring material and cutting holes through it, preferably by the use of a waterjet cutter.

5. A method according to any one of the preceding claims further comprising the step of pre-bending said one or more substrate members prior to the step of injection moulding.

6. A method according to any one of the preceding claims further comprising the step of integrally moulding a lip seal around a substantial part of the perimeter of the flooring material.

7. A method according to any one of the preceding claims wherein said one or more substrate members (4) comprise waterproof and boilable plywood.

8. A method according to any one of the preceding claims wherein the depth of said elastomer is varied across its width and/or its length.

9. A method according to any one of the preceding claims wherein said elastomer is a polyurethane.

10. A method according to claim 9, wherein said elastomer is a filled polyurethane material, and preferably filled with calcium carbonate and/or barium sulphate.

11. A flooring material or method according to any one of the preceding claims wherein said elastomer is formed from mixing a polyol stream and/or an isocyanate stream.

## Patentansprüche

1. Verfahren zur Herstellung eines zusammengesetzten Bodenbelags, umfassend den Schritt des Bereitstellens eines flexiblen Elastomermaterials (2) auf einer ersten Oberfläche eines oder mehrerer starrer Substratstücke (4); dadurch gekennzeichnet, daß dieser Schritt des Bereitstellens den Schritt des Spritzgießens dieses Elastomermaterials (2) direkt auf diese erste Oberfläche umfaßt.

2. Verfahren nach Anspruch 1, welches darüber hinaus den Schritt des Formpressens von Trägerstücken (16) auf eine zweite Oberfläche dieser ein oder mehreren Substratstücke (4) umfaßt.

3. Verfahren nach Anspruch 1 oder 2, worin dieser Bodenbelag eine Vielzahl von benachbarten Substratstücken (4) enthält, und darüber hinaus den Schritt des Anbringens eines Bandes (20) zur Überbrückung aneinander angrenzender Kanten dieser Substratstücke vor dem Schritt des Spritzgießens umfaßt.

4. Verfahren nach Anspruch 1, 2 oder 3, welches darüber hinaus den Schritt des Formens dieses Bodenbelags und des Schneidens von Löchern durch ihn, vorzugsweise unter Verwendung eines Wasserstrahlschneiders, umfaßt.

5. Verfahren nach einem der vorangegangenen Ansprüche, welches darüber hinaus den Schritt des zuvorigen Biegens dieser ein oder mehreren Substratstücke vor dem Schritt des Spritzgießens umfaßt.

6. Verfahren nach einem der vorangegangenen Ansprüche, welches darüber hinaus den Schritt des integrierten Formpressens einer Lippendichtung um einen beträchtlichen Teil der äußeren Begrenzung des Bodenbelags umfaßt.

7. Verfahren nach einem der vorangegangenen Ansprüche, worin diese ein oder mehreren Substratstücke (4) wasserfestes und siedefähiges Sperrholz umfassen.

8. Verfahren nach einem der vorangegangenen Ansprüche, worin die Tiefe dieses Elastomers über seine Breite und/oder entlang seiner Länge variiert.

9. Verfahren nach einem der vorangegangenen Ansprüche, worin dieses Elastomer ein Polyurethan ist.

10. Verfahren nach Anspruch 9, worin dieses Elastomer ein gefülltes Polyurethanmaterial ist, das vorzugsweise mit Calciumcarbonat und/oder Bariumsulfat gefüllt ist.

11. Bodenbelag oder Verfahren nach einem der vorangegangenen Ansprüche, worin dieses Elastomer aus dem Mischen eines Polyolstroms und/oder eines Isocyanatstroms gebildet wird.

## Revendications

1. Procédé pour fabriquer un matériau de plancher composite, comprenant l'étape dans laquelle on applique un matériau élastomère flexible (2) sur une première surface d'un ou de plusieurs éléments de substrat rigides (4), caractérisé en ce que ladite étape d'application comprend l'étape de moulage par injection dudit matériau élastomère (2) directement sur ladite première surface.

2. Procédé selon la revendication 1, comprenant en outre l'étape dans laquelle on moule des éléments supports (16) sur une deuxième surface du(des) élément(s) de substrat (4).

3. Procédé selon la revendication 1 ou la revendication 2, dans lequel ledit matériau de plancher comprend une multiplicité d'éléments de substrat adjacents (4) et comprend en outre l'étape dans laquelle on applique un ruban (20) pour recouvrir les bords adjacents desdits éléments de substrat, avant ladite étape de moulage par injection.

4. Procédé selon l'une des revendications 1, 2 et 3, comprenant en outre l'étape dans laquelle on forme ledit matériau de plancher et on y découpe des trous, de préférence en utilisant un dispositif de coupe à jet d'eau.

5. Procédé selon l'une quelconque des revendications précédentes, comprenant en outre l'étape dans laquelle on courbe au préalable le(s) élément(s) de substrat avant l'étape de moulage par injection.

6. Procédé selon l'une quelconque des revendications précédentes, comprenant en outre l'étape dans laquelle on moule d'un seul tenant un rebord d'étanchéité autour d'une partie substantielle du périmètre du matériau de plancher.

7. Procédé selon l'une quelconque des revendications précédentes, dans lequel le(s) élément(s) de substrat (4) comprend un contreplaqué résistant à l'eau et à l'ébullition.

8. Procédé selon l'une quelconque des revendications précédentes, dans lequel l'épaisseur dudit élastomère varie en travers de sa largeur et/ou sa longueur.

9. Procédé selon l'une quelconque des revendications précédentes, dans lequel ledit élastomère est un polyuréthane.

10. Procédé selon la revendication 9, dans lequel ledit élastomère est un matériau polyuréthane chargé, et de préférence chargé avec du carbonate de calcium et/ou du sulfate de baryum.

11. Matériau de plancher ou procédé selon l'une quelconque des revendications précédentes, dans lequel ledit élastomère est formé en mélangeant un courant de polyol et/ou un courant d'isocyanate.
